# EUROPEAN PATENT APPLICATION

(11) **EP 0 692 401 A1**
(43) Date of publication of application: **17.01.1996**
(21) Application number: 95304667.9
(22) Date of filing: 04.07.1995
(51) Int. Cl.: B60N 2/28

(54) **Child safety seat for motor vehicles**

(30) Priority: 16.07.1994 GB 9414416
(71) Applicant: Britax-Excelsior Limited, Warwick CV34 6DE (GB); BRITAX RÖMER Kindersicherheit GmbH, D-89077 Ulm (DE)
(72) Inventor: Burleigh, David William, Bognor Regis, West Sussex PO21 4XN (GB); Barley, Geoffrey Wilfred, Salisbury, Wiltshire SP5 1DQ (GB); Czernakowski, Waldemar, D-89134 Blaustein (DE); Wetter, Hermann, D-89075 Ulm (DE)
(74) Representative: Hollinghurst, Antony

(57) **Abstract**

A child safety seat for use in a vehicle has a seat body (30) and front and rear releasable connectors (44, 46, 66, 72) for rigidly connecting the seat body (30) to standard anchorage units (16, 18, 24, 26) on a motor vehicle. The front releasable connectors (66, 72) are connected to the seat body (30) by mounting arms (58, 60) which are movable between a first position in which the front releasable connectors (66, 72) are engageable with the standard anchorage units (24, 26) and a second position in which the mounting means (58, 60, 62, 68) forms a handle above the centre of gravity of the seat for carrying the seat and an infant occupant.

## Description

This invention relates to a child safety seat, for use in a vehicle, of the type comprising a seat body and front and rear releasable connectors for rigidly connecting the seat body to standard anchorage units on a motor vehicle.

It is well known for the coupling means of a seat of this type to comprise an adult seat belt, the child seat resting on the corresponding vehicle seat. The disadvantage of this arrangement is that, even if the adult belt is pulled very tight during installation, the resilience of both the vehicle seat and the adult belt, will permit undesirable movement of the child seat relative to the vehicle in the event of sudden deceleration, for example, during an accident. In order to overcome this disadvantage, it has been proposed to provide motor cars with standard anchorage units at agreed locations both in front of the seat and at the bottom of the backrest. In use, these anchorage are engaged by releasable connectors which are rigidly coupled to a child seat. Such anchorage units are herein referred to as "standard anchorage units", the anchorage units in front of the seat being called "front standard anchorage units" and the anchorage units at the bottom of the backrest being called "rear standard anchorage units".

The releasable connectors of a seat of this type are, of necessity, mounted on a structure which projects from the seat body to a substantial extent. This makes the seat difficult to handle when not fitted in a vehicle. It has already been proposed to mount the connectors for the front anchorages of such a seat on means which fold relative to the seat body. The present invention aims to provide an improved seat of this type.

According to the invention, in a safety seat of the type described above, two of the releasable connectors are connected to the seat body by mounting means which are movable between a first position in which the releasable connectors are engageable with the standard anchorage units and a second position in which the mounting means forms a handle above the centre of gravity of the seat for carrying the seat and an infant occupant.

Embodiments of the invention will now be described, by way of example, with reference to the accompanying drawings, in which:
Figure 1 is a perspective view of a vehicle seat equipped with standard anchorage units of the type described above;
Figure 2 is a side view of a child safety seat in accordance with the invention, intended to be used with a child occupant facing rearwardly within the vehicle, with its releasable connectors in position to engage with standard anchorage units;
Figure 3 is a perspective view of a base frame for the seat shown in Figure 2;
Figure 4 is a side view of the seat shown in Figure 2 but with the mounting means for two of releasable connectors pivoted to a position in which they form a carrying handle; and
Figure 5 is a perspective view of the base frame shown in Figure 3 with the releasable connectors in the position shown in Figure 4.

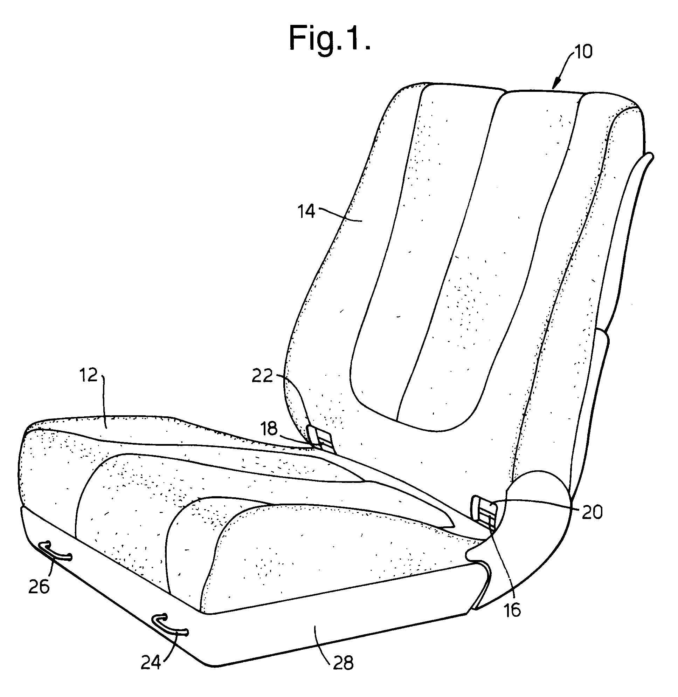

Figure 1 shows a vehicle seat 10 equipped with two front standard anchorage units and two rear standard anchorage units of the type described above. The seat comprises a seat portion 12 and a backrest 14. The rear standard anchorage units comprise transversely extending rods 16 and 18 which are accessible through openings 20 and 22 in the bottom of the backrest and which are rigidly secured to the frame (not shown) of the seat 10. The front standard anchorage units comprise U-shaped rods 24 and 26 which have the ends of their limbs secured to the front edge of a base portion 28 of the seat portion 12.

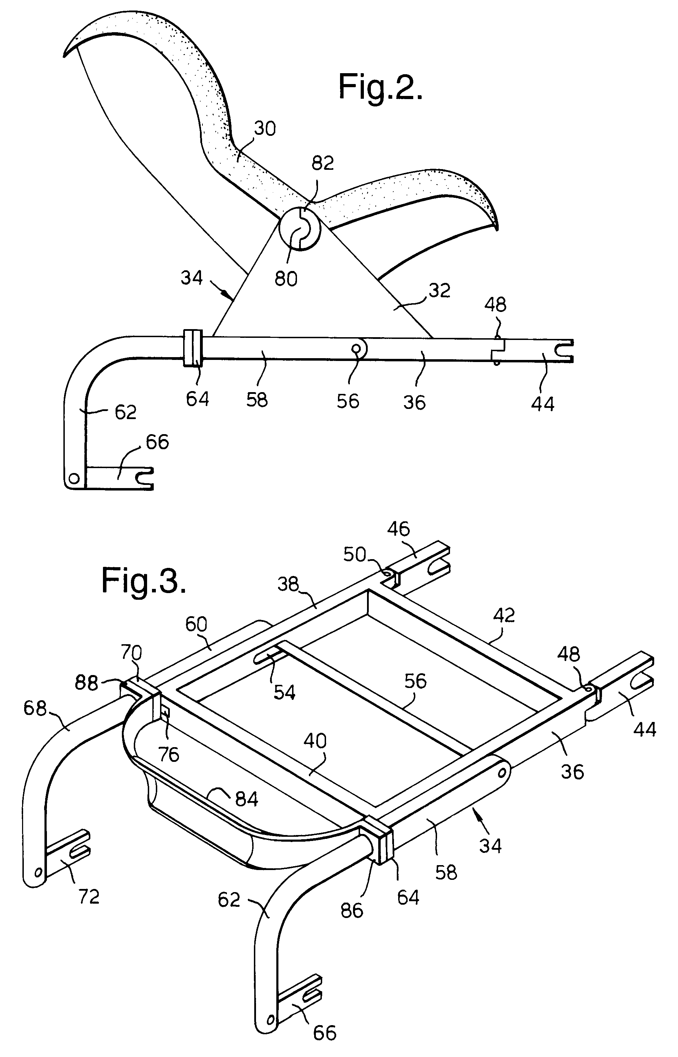

Figure 2 shows an infant seat for use with the standard anchorage units shown in Figure 1. The seat comprises a seat shell 30 which is mounted by pivot joints (not shown) between the top corners of a pair of triangular side plates 32 of a base 34. As can be seen in Figure 3, the base 34 includes a rectangular base frame having side members 36 and 38 (to which the side plates 32 are rigidly fixed), a front member 40 and a rear member 42. A pair of buckles 44 and 46, for engagement with the rear standard anchorage units 16 and 18 (Figure 1), are coupled to the rear ends of the side members 36 and 38 by respective vertical pivot points 48 and 50.

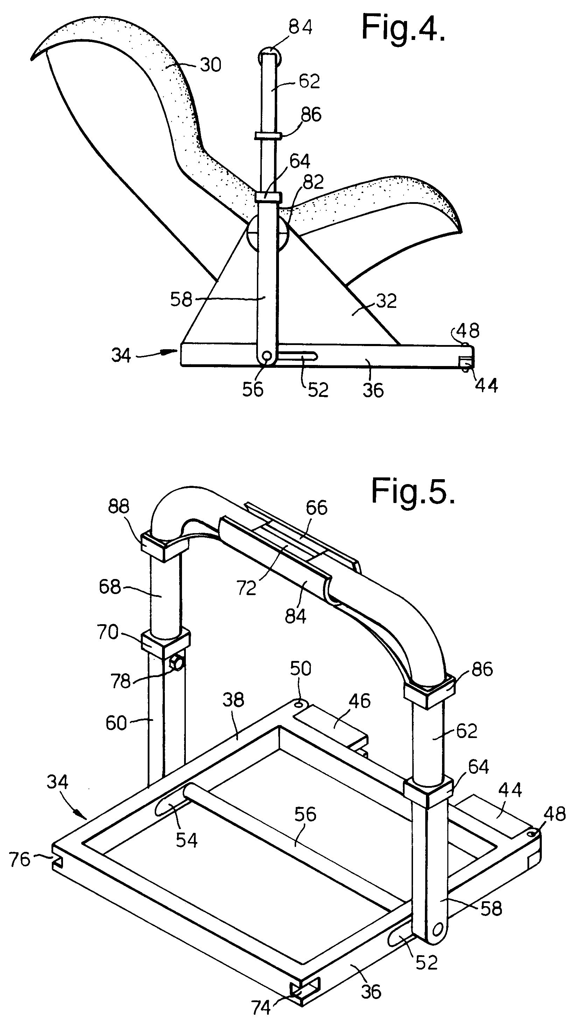

Each of the side members 36 and 38 contain an elongate slot 52, 54 (see also Figures 4 and 5). A transverse rod 56 projects through the slots 52 and 54 and has respective arms 58 and 60 secured to its ends. A tubular L-shaped extension 62 is secured to the forward end of the arm 58 by a swivel joint 64 which permits angular movement of the extension 62 relative to the arm 58 about the longitudinal axis of the latter. A buckle 66 is connected to the free end of the extension 62 for engagement with the front standard anchorage unit 24. A similar extension 68 is connected by a similar swivel joint 70 to the forward end of the other arm 60 and has a buckle 72 on its free end for engagement with the other front standard anchorage unit 26. The buckles 44, 46, 66 and 72 may be as described in EP-A-0619201.

As can best be seen from Figure 5, the side members 36 and 38 of the base 34 have grooves 74 and 76 in the front ends of their side faces. When the arm 60 is in the orientation shown in Figures 2 and 3, a stud 78 (Figure 5) engages in the groove 76 to prevent angular movement of the arm 60 and the extension 68 about the transverse rod 56. A similar stud (not shown) on the other arm 58 engages in the groove 74. The stud 78, and the corresponding stud on the arm 58 are positioned so that, when the transverse rod 56 is at the rear ends of the slots 52 and 54, the studs are at the rear ends of their respective grooves 74 and 76.

The grooves 74 and 76 are shorter than the slots 52 and 54 but are long enough to provide a sufficient range of adjustment of the distance between each of the front buckles 66 and 72 and the corresponding rear buckles 44 and 46 to cover the range of variation of distance between the front and rear standard anchorage units in different types of vehicle. Consequently, when the buckles 44 and 46 are engaged with the rear standard anchorage units 16 and 18 and the buckles 66 and 72 are engaged with the front standard anchorage units 24 and 26, the arms 58 and 60 are locked against angular movement about the transverse rod 56.

When the front buckles 66 and 72 are disengaged from the front anchorage units 24 and 26, the arms 58 and 60 can be pulled forwardly to bring the rod 56 to the front ends of the slots 52 and 54 and disengage the stud 78, and the other stud on the arm 58, from the grooves 76 and 74. The arms 58 and 60 are then pivoted through 90° to the position shown in Figures 4 and 5, the stud 78 and the other stud on the arm 58 engaging in semicircular recesses 80 (Figure 2) in respective knobs 82 on the ends of the pivot joints connecting the seat shell 30 to the triangular side plates 32. The knobs 82 are turned through 90° in the clockwise direction, as viewed in Figure 2, into the orientation shown in Figure 4, so as to capture the stud 78 and the other stud on the arm 58, thereby securing the arms 58 and 60 in position.

Next, the extensions 62 and 68 pivot about their respective swivel joints 64 and 70 so that the two front buckles 66 and 72 abut against one another. A hollow part-cylindrical hand grip 84, mounted on the L-shaped extensions 62 and 68 by means of respective sliders 86 and 88, is slid upwardly so as to abut against and partially surround the front buckles 66 and 72, as shown in Figures 4 and 5. The rear buckles 44 and 46 are then released from the rear standard anchorage units 16 and 18 and child safety seat is lifted off the vehicle seat by means of the hand grip 84. Finally, the rear buckles 44 and 46 are pivoted inwardly about their pivot pints 48 and 50 so as to abut against the rear frame member 42.

## Claims

1. A child safety seat for use in a vehicle, comprising a seat body (30) and front and rear releasable connectors (44, 46, 66, 72) for rigidly connecting the seat body (30) to standard anchorage units (16, 18, 24, 26) on a motor vehicle, characterised in that two of the releasable connectors (66, 72) are connected to the seat body (30) by mounting means (58, 60, 62, 68) which are movable between a first position in which the releasable connectors (66, 72) are engageable with respective standard anchorage units (24, 26) and a second position in which the mounting means (58, 60, 62, 68) forms a handle above the centre of gravity of the seat for carrying the seat and an infant occupant.

2. A child safety seat according to claim 1, wherein said two releasable connectors are front releasable connectors (66, 72), and the mounting means (58, 60, 62, 68) pivots about a transverse axis (56) below the seat body (30).

3. A child safety seat according to claim 2, wherein the mounting means (58, 60, 62, 68) has intermediate pivot joints (64, 70) allowing the front releasable connectors (66, 72) to pivot into abutting relationship with one another.

4. A child safety seat according to claim 3, further comprising hand grip (84), mounted on the mounting means (58, 60, 62, 68) so as be slidable into a position partially surrounding the front releasable connectors (66, 72) when in said abutting relationship.

5. A child safety seat according to any preceding claim, wherein two rear releasable connectors (44, 46) are pivotable to a stowed position below the seat body (30).

6. A child safety seat according to any preceding claim, in combination with a vehicle, the vehicle having an adult vehicle seat (10) with a seat portion (12) and a backrest portion (14), two front anchorage units (24, 26) rigidly secured to the vehicle below the front edge of a vehicle seat (10) for engagement by said front releasable connectors (66, 72), and a rear anchorage unit (16, 18) rigidly secured to the vehicle at the bottom of the backrest portion of the vehicle seat for engagement by a rear releasable connector (44, 46).
